# EUROPEAN PATENT SPECIFICATION

(11) **EP 3 237 768 B1**
(45) Date of publication and mention of the grant of the patent: **20.11.2019**
(21) Application number: 15826044.8
(22) Date of filing: 16.12.2015
(51) Int. Cl.: F16C 1/22

(54) **COMPENSATION DEVICE**
KOMPENSATIONSVORRICHTUNG
DISPOSITIF DE COMPENSATION

(30) Priority: 24.12.2014 GB 201423185
(43) Date of publication of application: 01.11.2017
(73) Proprietor: Marchantcain Design Limited, Coventry CV4 9XA (GB)
(72) Inventor: MARCHANT, Robert, Coventry Warwickshire CV5 9DD (GB)
(74) Representative: Unsworth, Jennifer Mary
(86) International application number: PCT/GB2015/054027
(87) International publication number: WO 2016/102932

(56) References cited:
- US-A1- 2006 179 965

## Description

This invention relates to a compensation device for use in conjunction with a cable, for example a Bowden cable or the like.

There are many applications in which cables, including Bowden cables, are used to drive components for movement. By way of example, they are frequently used in driving the windows of a road vehicle between open and closed positions. In such arrangements, a slide is typically arranged to be displaced along a guide, the slide being connected to a window support such that movement of the slide along the guide drives the window support, and a window pane associated therewith for movement. A drive cable is connected between the slide and a pulley driven for rotation by a drive motor such that operation of the drive motor drives the window for opening and closing movement.

It is desirable, especially in arrangements in which the window is of the frameless type, for a controller controlling the operation of the motor to be supplied with information indicative of the position of the window so as to ensure that operation of the motor ceases with the window in desired positions. This is typically achieved by monitoring the rotation of the motor. Whilst monitoring the rotation of the motor can provide sufficiently accurate information for control purposes, it requires there to be a known relationship between the motor position and the window position. If, in use, the drive cable stretches or otherwise deforms, then this known relationship is lost and there is a risk that the controller controlling the operation of the motor will no longer be able to provide the required level of control over the window position.

Whilst the description hereinbefore relates to controlling the motion of a window of a road vehicle, it will be appreciated that similar issues apply in other applications in which components are driven for movement using a cable drive arrangement. The invention applies to any such application. By way of example, the invention also applies to arrangements used to drive the spoiler of an active spoiler system for movement, or to systems used to adjust, for example, bodywork, wing mirrors, seating positions or controls of a heating or air conditioning system of a vehicle. It may also be applied to a wide range of other applications, both vehicle related applications and non-vehicle related applications.

A number of cable compensator devices are known which are arranged to maintain tension in or take up slack in a drive cable arising from the drive cable becoming stretched, in use. By way of example, EP0174830 and EP0761518 both describe arrangements in which spring biased or operated levers are movable to take up such slack. EP0318720 describes an arrangement in which spacers drop into position to take up such slack. Furthermore, a number of arrangements are known in which slack in a drive cable is taken up by compensator devices in which a linear ratchet or ratchet-like arrangement is provided between components thereof. By way of example, EP0658696, EP0778925 and EP1870604 describe arrangements of this general type. It will be appreciated that these are merely examples of known cable compensator devices and that other arrangements are also known.

US2006/0179965 describes another cable adjustment device.

It is an object of the invention to provide a cable compensation device of relatively simple and convenient form.

According to the present invention there is provided a cable compensation device as defined by appended Claim 1.

Preferably the ratchet formation is provided on or associated with the housing and the ratchet member is angularly fixed to the adjustment member. The adjustment member is preferably provided with a passage of non-circular cross-sectional shape within which a non-circularly shaped part of the ratchet member is located. Such an arrangement results in the ratchet member being angularly fixed to the adjustment member but may allow relative axial movement to occur therebetween.

The thread feature provided on the part of the adjustment member conveniently takes the form of at least one helical rib provided on the exterior of the said part, the or each helical rib mating with a corresponding helical groove provided within the housing. The pitch, height, profile or other characteristics of the helical rib, and corresponding characteristics of the helical groove, are chosen to suit the application in which the compensation device is to be used, taking into account, for example, the approximate anticipated amount of extension of the associated cable, the rate of the resilient biasing means, etc.

The invention further relates to a cable drive mechanism comprising a cable, and a compensation device of the type set out hereinbefore operable to maintain tension in or take up slack in the cable. The cable may comprise a Bowden cable or the like, in which case movement of the housing relative to the adjustment member may be arranged to take up slack in an inner cable of the Bowden cable by adjusting the position of part, for example an end part, of the sleeve of the Bowden cable. It will be appreciated, however, that this need not always be the case.

The cable drive mechanism may form part of, for example, a window drive mechanism for a vehicle window. Alternatively, it may comprise part of an active spoiler system, or may be used in a number of other applications.

The invention will further be described, by way of example, with reference to the accompanying drawings, in which:
Figure 1 is a perspective view illustrating a cable drive system incorporating a cable compensation device in accordance with an embodiment of the invention;
Figures 2 and 3 are views similar to Figure 1 illustrating the cable compensation device in different stages of operation;
Figure 4 is an exploded view illustrating the cable compensation device of the system of Figures 1 to 3; and
Figures 5 and 6 are views similar to Figure 4 but illustrating alternative configurations.

Referring to the accompanying drawings, a cable drive system 10 is illustrated for use in driving a component 12 for movement relative to a guide 14. In the arrangement illustrated, the component 12 and guide 14 take the form of parts of an active spoiler drive system. It will be appreciated, however, that the invention may be employed in a wide range of applications and is not restricted to this use. By way of example, it could be employed in a window drive system, or in a number of other applications.

The cable drive system 10 comprises an electric motor 16 operable to drive a drum 18 for rotation. Entrained around the drum 18 are the inner cables 20, 21 of a pair of Bowden cables, the other ends of which are connected to the component 12. The Bowden cables each further comprise an outer sleeve 22, 24 through which the respective inner cables 20, 21 extend. Whilst the description herein is of an arrangement including a pair of Bowden cables, arrangements including just a single cable are also possible.

In use, rotation of the motor 16 to drive the drum 18 for rotation in a direction taking up the inner cable 20 that extends within the first sleeve 22 will result in upward movement of the component 12 in the orientation illustrated, the inner cable 21 unwinding from the drum 18 to feed through the second sleeve 24 to permit such movement. Rotation of the drum 18 in the reverse direction under the control of the motor 16 drives the component 12 for downward movement in the direction illustrated. It will be appreciated that during raising movement the inner cable 20 that extends through the first sleeve 22 will be placed under significant tension, the first sleeve 22 itself experiencing a compressive load. Whilst experiencing a compressive load, the first sleeve 22 will not significantly physically compress or contract in length as a result of the application of the compressive load.

In many applications it is important or desirable for the position occupied by the component 12 to be accurately controlled. This is typically achieved by appropriate monitoring of the rotation of the motor 16, relying upon there being a known relationship between the motor position and the position of the component 12. If, in use, one or other, or both of the inner cables 20, 21 becomes stretched, then the relationship between the motor position and the position occupied by the component 12 will be lost, and so accurate control over the position of the component 12 may no longer be possible.

In accordance with an embodiment of the invention, in order to address this concern, a cable compensation device 26 is provided. The cable compensation device 26 is, in this embodiment, attached to part of the cable drum housing 19 adjacent the drum 18, and serves to locate the end part of the first sleeve 22, adjusting the location of the end of the first sleeve 22 relative to the cable drum housing 19 to accommodate elongation of the inner cables 20, 21. The cable compensation device 26 serves, in effect, as an extension to the first sleeve 22, the cable compensation device 26 being of variable length and increasing in length to match any stretching of the inner cables 20, 21 whilst withstanding the compressive loads experienced in use.

The cable compensation device 26 comprises a housing 28 of hollow tubular form, a central passage 30 of which is dimensioned to slidingly receive a generally cylindrical part 32 of an adjustment member 34. The outer surface of the part 32 is provided with a thread formation in the form of one or more generally helical ribs 36, the surface defining the passage 30 being formed with corresponding generally helical grooves 38. It will be appreciated that the adjustment member 34 and housing 28 are free to undergo telescoping movement relative to one another, the engagement of the ribs 36 within the grooves 38 requiring such telescoping movement to be accompanied by angular or rotary movement of the housing 28 relative to the adjustment member 34.

An end of the adjustment member 34 is provided with an outwardly extending flange 40. In the arrangement illustrated the flange 40 is shown as being of generally circular shape, but it will be appreciated that the invention is not restricted in this regard. A similar flange 42 is provided on the housing 28, resilient biasing means in the form of a spring 44 being located between the flanges 40, 42 and applying a biasing load to the adjustment member 34 and housing 28, urging them apart. If desired, the flanges 40, 42 may be provided with collars or other formations adapted to retain the spring 44. The collars or other formations could be integral with the flanges, or comprise separate parts. Depending upon the application in which the invention is used, the flange 40 may further be shaped to assist in attachment to or engagement with adjacent components.

An end surface of the housing 28 is provided with a series of ratchet teeth formations 46.

The adjustment member 34 includes a central through passage 48 of non-circular cross-section. In the arrangement illustrated it is of hexagonal cross-section, but it will be appreciated that other shapes are also possible without departing from the scope of the invention. Furthermore, whilst it may be convenient for the passage 48 to be of constant cross-section along or throughout its length, this need not always be the case. Slidably received within the passage 48 is a stem 50, of cross-sectional shape matching that of the passage 48, projecting from a ratchet member 52, the ratchet member 52 including a surface provided with ratchet teeth formations 54 adapted to cooperate with the formations 46 provided upon the housing 28. Like the passage 48, the stem 50 need not be of uniform cross-section along its length.

The ratchet member 52 defines a through passage 56. It will be appreciated that the ratchet member 52 and formations 46 interengage to allow rotation of the housing 28 relative to the ratchet member 52 in one direction, limiting or resisting reverse rotation, and hence resisting contraction of the cable compensator device 26.

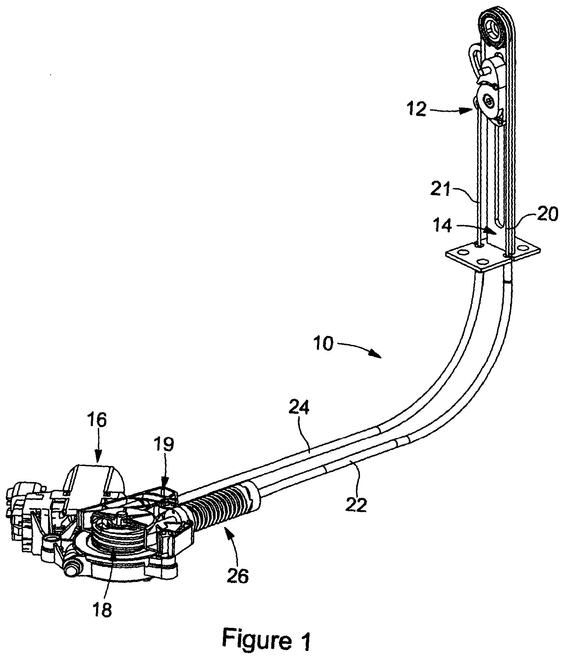

As illustrated in Figures 1 to 3, the cable compensation device 26 is mounted between the cable drum housing 19, adjacent the drum 18, and an end of the first sleeve 22. The inner cable 20 extends through the cable compensation device 26, extending though the passage 56 of the ratchet member 52 and the passage 48 of the adjustment member 34. The adjustment member 34 bears against and, preferably, is held captive to, or may even form part of, the cable drum housing 19, and the end of the first sleeve 22 bears against the end of the ratchet member 52. If desired, the end of the ratchet member 52 facing the first sleeve 22 may be formed with a pocket to receive the end of the first sleeve 22.

The spring 44 applies a load to the housing 28 and adjustment member 34, urging them apart, and thus applies a compressive load to the first sleeve 22. As a result, contact is maintained between the ratchet member 52 and the first sleeve 22, and between the ratchet member 52 and the ratchet formations 46.

Figure 1 illustrates the cable drive system 10 when initially installed, and it will be appreciated that in this condition the majority or all of the part 32 is located within the passage 30, the cable compensation device 26 being of relatively short length. Over time, if the inner cable 20 becomes stretched, then during those parts of the operation of the cable drive system 10 under which the inner cable 20 extending within the first sleeve 22 is under relatively low tension, the load applied by the spring 44 to the adjustment member 34 and housing 28 will be able to urge the housing 28 and adjustment member 34 apart. The thread-like interengagement between the ribs 36 and grooves 38 requires such movement to be accompanied by angular movement of the housing 28 relative to the adjustment member 34 about its axis. The location of the stem 50 of the ratchet member 52 within the passage 48 of the adjustment member 34 keys the ratchet member 52 to the adjustment member 34. Accordingly, it will be appreciated that relative angular movement will occur between the housing 28 and the ratchet member 52. If the movement is sufficient, then the ratchet formations 46, 54 will ride over one another, subsequently interacting to prevent return movement of the housing 28 relative to the adjustment member 34 when the tension within the inner cable 20 increases. Of course, if less movement occurs and the ratchet formations 46, 54 do not fully ride over one another, then the ratchet, by design, permits limited return movement, in order to compensate for the total tolerance in the system 10.

It is envisaged, for simplicity, to provide six ratchet tooth formations 46 and a corresponding number of formations 54. The formations 46, 54 need not be identical to one another, but are shaped to interact with one another to permit relative rotary movement in one direction, restricting reverse rotation. It will be understood that a wide range of designs for the formations 46, 54 are possible without departing from the scope of the invention.

When the length of the cable 20 within the first sleeve 22 is under higher tension as a result of the operation of the motor 16 to move the component in the upward direction, the cooperation between the ratchet formations prevents angular movement between the ratchet member 52 and the housing 28, in turn preventing movement between the housing 28 and the adjustment member 34, ensuring that the overall length of the cable compensation device 26, and thus the location of the end of the first sleeve 22, is maintained, thereby ensuring correct operation of the system with which the device 26 is associated. The face contact between the ratchet member 52 and the housing 28 allows significant compressive loads to be accommodated without damage to the device 26, the rotary ratchet formed by the ratchet member 52 and the formations 46 serving to prevent contraction of the device 26, thus maintaining the end of the first sleeve 22 in the desired position.

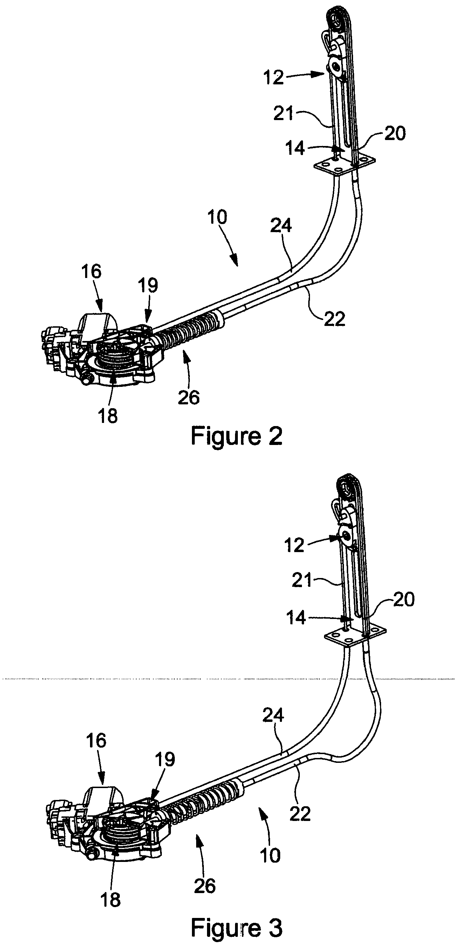

It will be appreciated that the operation of the cable compensation device 26 as outlined above serves to extend the length of the cable compensation device 26 over time, adjusting the position of the end of the first sleeve 22, thus compensating for extension of the cables 20, 21 that occurs over time. As can be seen in Figures 2 and 3, as the position of the end of the first sleeve 22 changes, the shape adopted by the first sleeve 22 changes. Figure 3 illustrates the device 26 in a fully extended condition, the flexing of the first sleeve 22 being exaggerated for clarity.

The use of a rotary ratchet arrangement to restrict return movement of the housing 28 relative to the adjustment member 34 allows the maximum level of axial return movement that is permitted by the ratchet arrangement to be very small, thereby ensuring that a good level of control over the position occupied by the component 12 can be maintained, in use. It further ensures that the compressive loads experienced, in use, are spread over a relatively large area, and so the risk of failure or damage to the ratchet arrangement is reduced. The device 26 is thus of good reliability.

By compensating for changes in the length of the cables 20, 21 in this manner, a known relationship between the motor position and the position of the component 12 can be maintained, thus better control over the movement and position of the component can be achieved.

Whilst the cable drive system is illustrated with the cable compensation device located between the cable drum housing 19 and an end of the first sleeve 22, it will be appreciated that the location of the cable compensation device 26 may be modified to suit the application in which the device is to be used, to suit packaging and space constraints, and the like. If desired, the cable compensation device 26 could be located to the opposite end of the first sleeve 22, or part way along the first sleeve 22. It could alternatively, or additionally, be associated with the second sleeve 24, if desired. The characteristics of the spring and the pitches or other characteristics of the ribs and grooves may be modified to suit the application in which the device is to be used, and to take into account, for example, the anticipated extension of the cables 20, 21 over time.

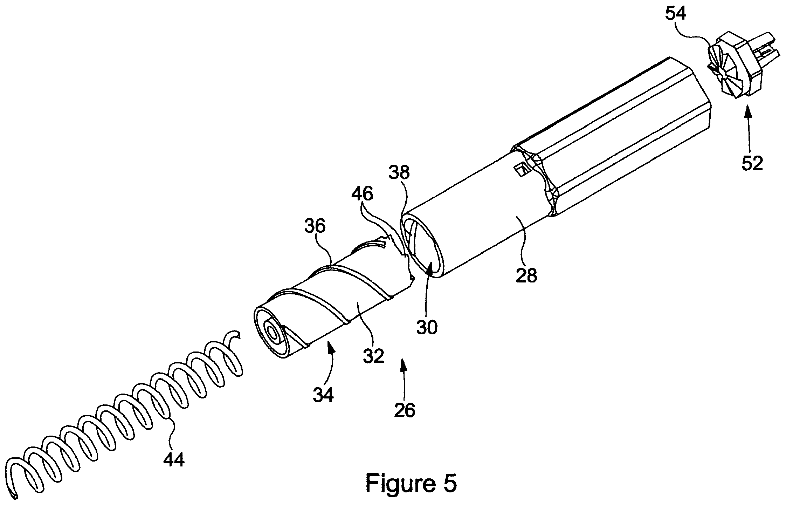

The description hereinbefore relates to an arrangement in which the ratchet formation 46 is provided upon the housing 28, and the ratchet member 52 is keyed to the adjustment member 34. It will be appreciated that other configurations are possible, and Figure 5 illustrates one such configuration in which the ratchet member 52 is keyed to the housing 28 so as to be axially moveable relative thereto, but such that relative rotary movement therebetween is resisted, the ratchet formation 46 being provided upon the adjustment member 34. In this arrangement, the spring 44 is located internally of the adjustment member 34. Operation of the arrangement of Figure 5 is substantially the same as described hereinbefore with reference to Figures 1 to 4, and so will not be described herein in further detail.

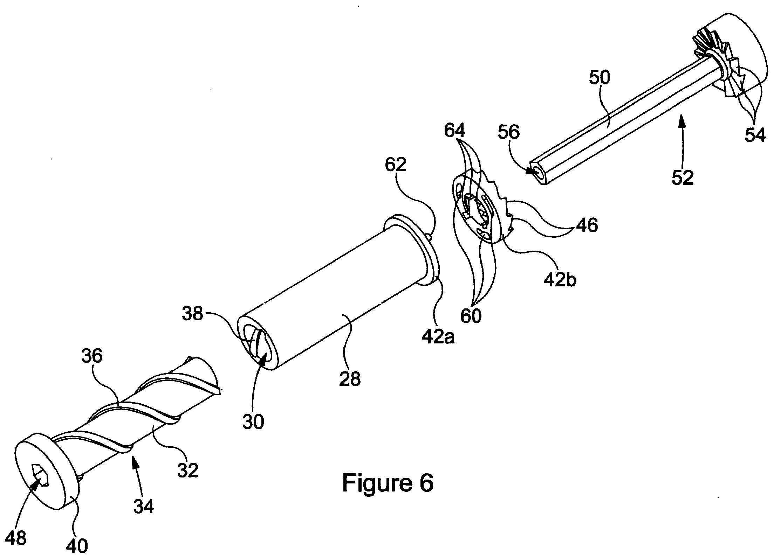

A further variant of the design described with reference to Figures 1 to 4 is illustrated in Figure 6. In this variant, the flange 42 is formed in two parts, comprising a part 42a which, conveniently, is formed integrally with the remainder of the housing 28, but could alternatively be rigidly secured thereto, and a separate part 42b on which the ratchet formations 46 are provided. The part 42b is provided with one or more part-circular slots or recesses 60 adapted to receive corresponding pegs or projections 62 provided on the part 42a, the projections 62 and slots or recesses 60 cooperating with one another to allow angular movement between the parts 42a, 42b through a restricted, controlled angle. It will be appreciated that the locations of the pegs 62 and recesses 60 may be reversed, if desired, and that the number of pegs 62 and recesses 60 may be selected to suit the application in which the device 26 is being used. The size of the recesses 60 can be accurately controlled so as to permit fine control over the permitted range of angular movement between the parts 42a, 42b.

The spring 44 is not shown in Figure 6, but would be arranged in substantially the same fashion as in the arrangement of Figures 1 to 4, in use.

In use, the arrangement of Figure 6 operates in substantially the same fashion as that of Figures 1 to 4 with the exception that upon initial angular movement between the housing 28 and the adjustment member 34, rather than the ratchet formations 46, 54 riding over one another, angular movement will occur between the parts 42a, 42b. Only if the angular movement between the housing 28 and the adjustment member 34 is sufficient to result in the pegs 62 bearing against the ends of the recesses 60 to prevent further movement between the parts 42a, 42b will the ratchet projections 46, 54 start to ride over one another.

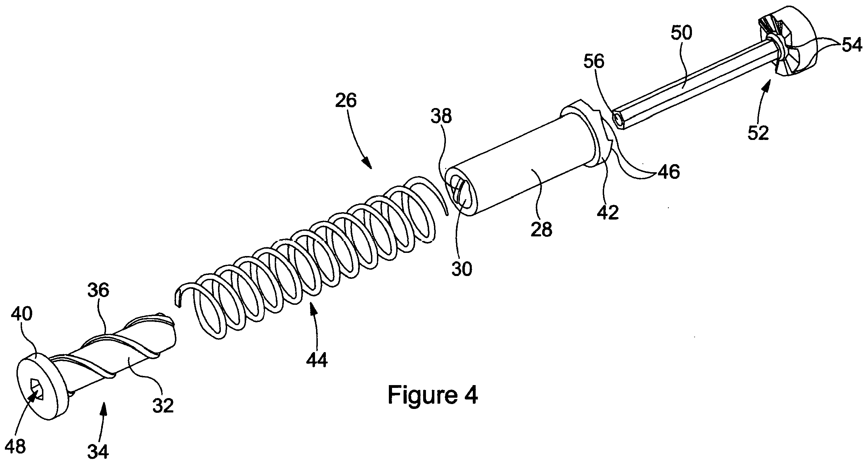

Limited return movement of the between the parts 42a, 42b, as controlled by the location of the pegs 62 within the recesses 60, and determined by the dimensions of the recesses 60, can compensate for the total tolerance in the system 10. By appropriate design of the recesses 60, it will be appreciated that fine control can be achieved in this regard. It will be appreciated by comparing Figure 6 with Figure 4 that the ratchet formations 46 of the arrangement of Figure 6 are much more closely packed than those of Figure 4, and the formations 54 are correspondingly arranged, the arrangement of Figure 6 compensating for tolerances in the system primarily through angular movement between the parts 42a, 42b, whereas that of Figure 4 compensating for such tolerances by having the ratchet formations 46 more widely spaced.

In the arrangement illustrated, the part 42b is snap fitted to the part 42a by clips 64, providing additional reliability and aiding assembly, but such a fitting may not always be required.

Clearly, in the arrangement of Figure 6, the ratchet formation 46 is not truly angularly fixed to the housing 28, but it is only moveable relative thereto through a controlled angle and so can be regarded as associated with the housing 28.

In an alternative configuration, an effect similar to that achieved by the arrangement of Figure 6 could be achieved by designing the device in such a manner that limited, controlled, angular movement is permitted between the adjustment member 34 and the ratchet member 52.

Although the description hereinbefore relates to specific example embodiments of the cable compensation device, it will be appreciated that a wide range of modifications and alterations may be made thereto without departing from the scope of the invention as defined by the appended claims. The arrangements described and illustrated are simplified for clarity. Depending upon the requirements of the application in which the actuator is to be used, changes may be made to the actuator, for example to make weight savings or enhance the load bearing capacity thereof, or to suit a manufacturing technique by which it is made. These changes may include, for example, incorporating cavities, varying edge and corner radii, incorporating strengthening ribs, and changing draft angles and/or chamfers or the like. It will be appreciated that this is a non-exhaustive list of changes that can be made.

## Claims

1. A cable compensation device comprising a housing (28) defining an internal passage, an adjustment member (34) including a part slidably located within the internal passage, the said part of the adjustment member (34) being provided with a thread feature cooperable with a corresponding feature provided within the housing (28) such that extending or retracting movement of the housing (28) relative to the adjustment member (34) is accompanied by relative angular movement therebetween, resilient biasing means (44) applying a biasing load urging the housing (28) for movement relative to the adjustment member (34), and rotary ratchet means operable to restrict angular movement between the housing (28) and the adjustment member (34), the ratchet means comprising a ratchet member (52) angularly fixed to or associated with one of the adjustment member (34) and the housing (28) and engageable with a ratchet formation (46) provided upon or associated with the other of the adjustment member (34) and the housing (28), **characterised in that** the ratchet means comprises a face ratchet means, an end surface of the said other of the housing (28) and the adjustment member (34), or of a component associated therewith, being provided with the ratchet formation (46) with which a corresponding face of the ratchet member (52) cooperates, in use.

2. A device according to Claim 1, wherein the ratchet formation (46) is provided on the housing (28) and the ratchet member (52) is angularly fixed to the adjustment member (34).

3. A device according to Claim 1, wherein the ratchet formation (46) is provided upon an angularly moveable part associated with the housing (28), moveable through a controlled angle relative thereto, and the ratchet member (52) is angularly fixed to the adjustment member (34).

4. A device according to Claim 2 or Claim 3, wherein the adjustment member (34) is provided with a passage (48) of non-circular cross-sectional shape within which a non-circularly shaped part of the ratchet member (52) is located.

5. A device according to any of the preceding claims, wherein the thread feature provided on the part of the adjustment member (34) takes the form of at least one helical rib (36) provided on the exterior of the said part, the or each helical rib (36) mating with a corresponding helical groove provided within the housing (28).

6. A device according to Claim 5, wherein the characteristics of the helical rib (36), and corresponding characteristics of the helical groove, are chosen to suit the application in which the compensation device is to be used.

7. A cable drive mechanism comprising a cable (20, 22), and a compensation device as claimed in any of the preceding claims and operable to take up slack in the cable.

8. A mechanism according to Claim 7, wherein the cable (20, 22) comprises a Bowden cable or the like, movement of the housing (28) relative to the adjustment member (34) being arranged to maintain the tension in and/or take up slack in an inner cable (20) of the Bowden cable by adjusting the position of part of the sleeve (22) of the Bowden cable.

9. A mechanism according to Claim 7 or Claim 8 and forming part of a window drive mechanism for a vehicle window or an active spoiler system.

## Patentansprüche

1. Kabelkompensationsvorrichtung, umfassend ein Gehäuse (28), das einen inneren Durchgang definiert, ein Einstellelement (34), das einen in dem inneren Durchgang verschiebbar gelegenen Teil umfasst, wobei der Teil des Einstellelements (34) mit einer Gewindeeinrichtung versehen ist, die mit einer auf eine solche Weise in dem Gehäuse (28) vorgesehenen entsprechenden Einrichtung zusammenwirken kann, dass eine ausfahrende oder einfahrende Bewegung des Gehäuses (28) relativ zu dem Einstellelement (34) von einer dazwischen liegenden relativen Winkelbewegung begleitet ist, ein Vorspannmittel (44), das eine Vorspannlast ausübt, die das Gehäuse (28) in eine Bewegung relativ zu dem Einstellelement (34) zwingt, und ein Drehratschenmittel, das in der Lage ist, eine Winkelbewegung zwischen dem Gehäuse (28) und dem Einstellelement (34) zu begrenzen, wobei das Ratschenmittel ein Ratschenelement (52) umfasst, das winkelig an einem von dem Einstellelement (34) und dem Gehäuse (28) befestigt ist oder demselben zugeordnet ist und mit einer Ratschenanordnung (46), die auf dem anderen von dem Einstellelement (34) und dem Gehäuse (28) vorgesehen ist oder demselben zugeordnet ist, in Eingriff gebracht werden kann, **dadurch gekennzeichnet, dass** das Ratschenmittel ein Stirnratschenmittel umfasst, wobei eine Endfläche des anderen von dem Gehäuse (28) und dem Einstellelement (34) oder einer demselben zugeordneten Komponente mit der Ratschenanordnung (46) versehen ist, mit der eine entsprechende Stirnfläche des Ratschenelements im Gebrauch zusammenwirkt.

2. Vorrichtung nach Anspruch 1, wobei die Ratschenanordnung (46) auf dem Gehäuse (28) vorgesehen ist und das Ratschenelement (52) winkelig an dem Einstellelement (34) befestigt ist.

3. Vorrichtung nach Anspruch 1, wobei die Ratschenanordnung (46) auf einem winkelig bewegbaren Teil, das dem Gehäuse (28) zugeordnet ist, vorgesehen ist und durch einen gesteuerten Winkel relativ zu demselben bewegbar ist und das Ratschenelement (52) winkelig an dem Einstellelement (34) befestigt ist.

4. Vorrichtung nach Anspruch 2 oder Anspruch 3, wobei das Einstellelement (34) mit einem Durchgang (48) mit einer nicht kreisförmigen Querschnittsform versehen ist, in dem sich ein nicht kreisförmig geformter Teil des Ratschenelements (52) befindet.

5. Vorrichtung nach einem der vorhergehenden Ansprüche, wobei die an dem Teil des Einstellelements (34) vorgesehene Gewindeeinrichtung die Form wenigstens einer spiralförmigen Rippe (36) annimmt, die auf der Außenseite des Teils vorgesehen ist, wobei die oder jede spiralförmige Rippe (36) zu einer entsprechenden spiralförmigen, in dem Gehäuse (28) vorgesehenen Rille passt.

6. Vorrichtung nach Anspruch 5, wobei die Eigenschaften der spiralförmigen Rippe (36) und die entsprechenden Eigenschaften der spiralförmigen Rille so ausgewählt sind, dass sie für die Anwendung, in der die Kompensationsvorrichtung verwendet werden soll, geeignet sind.

7. Kabelzugmechanismus, umfassend ein Kabel (20, 22) und eine Kompensationsvorrichtung nach einem der vorhergehenden Ansprüche, der in der Lage ist, einen Durchhang in dem Kabel aufzunehmen.

8. Mechanismus nach Anspruch 7, wobei das Kabel (20, 22) einen Bowdenzug oder dergleichen umfasst, wobei eine Bewegung des Gehäuses (28) relativ zu dem Einstellelement (34) so angeordnet ist, dass die Spannung in einem inneren Kabel (20) des Bowdenzugs aufrechterhalten und/oder ein Durchhang in demselben aufgenommen wird, indem die Position des Teils der Hülle (22) des Bowdenzugs eingestellt wird.

9. Mechanismus nach Anspruch 7 oder Anspruch 8, der Teil eines Fensterantriebsmechanismus für ein Fahrzeugfenster oder eines aktiven Spoilersystems bildet.

## Revendications

1. Dispositif de compensation de câble qui comporte un boîtier (28) délimitant un passage interne, un élément de réglage (34) comprenant une partie (32) disposée de manière coulissante dans le passage interne, ladite partie de l'élément de réglage (34) étant pourvue d'un élément de filetage pouvant coopérer avec un élément correspondant disposé à l'intérieur du boîtier (28), de telle sorte qu'un mouvement d'extension ou de rétraction du boîtier (28), par rapport à l'élément de réglage (34), est accompagné par un mouvement angulaire relatif entre ceux-ci, un moyen de sollicitation élastique (44) appliquant une charge de sollicitation poussant le boîtier (28) pour un mouvement par rapport à l'élément de réglage (34), et un moyen formant rochet rotatif pouvant être utilisé afin de restreindre un mouvement angulaire entre le boîtier (28) et l'élément de réglage (34), le moyen formant rochet comportant un élément de rochet (52) fixé de manière angulaire ou associé à l'un de l'élément de réglage (34) et du boîtier (28) et pouvant venir en prise avec une formation de rochet (46) disposée sur l'autre de l'élément de réglage (34) et du boîtier (28) ou associée à l'un de ceux-ci, **caractérisé en ce que** le moyen formant rochet comprend un moyen formant rochet frontal, une surface d'extrémité de l'autre du boîtier (28) et de l'élément de réglage (34), ou d'un composant associé à celui-ci, étant munie de la formation de rochet (46) avec laquelle une face correspondante de l'élément de rochet (52) coopère, en utilisation.

2. Dispositif selon la revendication 1, dans lequel la formation de rochet (46) est prévue sur le boîtier (28) et l'élément de rochet (52) est fixé angulairement sur l'élément de réglage (34).

3. Dispositif selon la revendication 1, dans lequel la formation de rochet (46) est prévue sur une partie angulairement mobile associée au boîtier (28), mobile à travers un angle contrôlé par rapport à celui-ci, et l'élément de rochet (52) est fixé angulairement sur l'élément de réglage (34).

4. Dispositif selon la revendication 2 ou la revendication 3, dans lequel l'élément de réglage (34) est pourvu d'un passage (48) de forme non circulaire en coupe transversale dans lequel se trouve une partie non circulaire de l'élément de rochet (52).

5. Dispositif selon l'une quelconque des revendications précédentes, dans lequel l'élément de réglage prévu sur la partie de l'élément de réglage (34) prend la forme d'au moins une nervure hélicoïdale (36) prévue sur l'extérieur de ladite partie, la ou chaque nervure hélicoïdale (36) étant en prise avec une rainure hélicoïdale correspondante prévue dans le boîtier (28).

6. Dispositif selon la revendication 5, dans lequel les caractéristiques de la nervure hélicoïdale (36) et les caractéristiques correspondantes de la rainure hélicoïdale sont choisies en fonction de l'application dans laquelle le dispositif de compensation doit être utilisé.

7. Mécanisme d'entraînement par câble comprenant un câble (20, 22), et un dispositif de compensation selon l'une quelconque des revendications précédentes et utilisable pour compenser le flottement du câble.

8. Mécanisme selon la revendication 7, dans lequel le câble (20, 22) comprend un câble Bowden ou similaire, le mouvement du boîtier (28) par rapport à l'élément de réglage (34) étant agencé pour maintenir la tension dans un câble intérieur (20) du câble Bowden et/ou compenser le flottement de celui-ci en ajustant la position de la partie du manchon (22) du câble Bowden.

9. Mécanisme selon la revendication 7 ou la revendication 8 et faisant partie d'un mécanisme d'entraînement de fenêtre pour une fenêtre de véhicule ou un système de becquet actif.
